# EUROPÄISCHE PATENTSCHRIFT

(11) **EP 1 000 682 B1**
(45) Veröffentlichungstag und Bekanntmachung des Hinweises auf die Patenterteilung: **21.01.2004**
(21) Anmeldenummer: 99121917.1
(22) Anmeldetag: 05.11.1999
(51) Int. Cl.: B21D 43/00, B21D 43/22, B21D 43/05

(54) **Transport- und Positioniereinrichtung**
Transport and positioning device
Dispositif de transport et positionnement

(30) Priorität: 10.11.1998 DE 19851744
(43) Veröffentlichungstag der Anmeldung: 17.05.2000
(73) Patentinhaber: Schuler Pressen GmbH & Co. KG, 73033 Göppingen (DE)
(72) Erfinder: Hofele, Hans, Dipl.-Ing., 73035 Göppingen (DE); Dangelmayr, Andreas, Dipl.-Ing., 73113 Ottenbach (DE); Eltze, Jürgen, Dr.-Ing., 73033 Göppingen (DE); Thudium, Karl, Dipl.-Ing., 73116 Wäschenbeuren (DE)
(74) Vertreter: Rüger, Barthelt & Abel Patentanwälte

(56) Entgegenhaltungen:
- DE-A- 3 040 655
- DE-A- 19 654 474
- US-A- 4 574 941
- US-A- 5 452 981

## Beschreibung

Die Erfindung betrifft eine Transport- und/oder Positioniereinrichtung, insbesondere für den Werkstücktransfer, insbesondere zum Transport von Blechteilen bei Transferpressen.

Bearbeitungsanlagen mit mehreren hintereinander angeordneten Bearbeitungsstationen erfordern einen Werkstücktransport von Arbeitsstation zu Arbeitsstation. Dazu dienen Transfereinrichtungen, die das betreffende Werkstück, bspw. ein Blechteil, in einer Bearbeitungsstation aufnehmen, aus dieser herausführen, es in die nächste Bearbeitungsstation einlegen und das Werkstück dort freigeben, um während der Bearbeitung desselben in einer von der Bearbeitungsstation beabstandeten Parkposition zu verharren. Insbesondere bei Großteilpressen, bei denen großflächige Karosserieteile von Kraftfahrzeugen, im Einzelfall ganze Karosserieseitenteile, bearbeitet werden, sind die Teile mehrere Meter breit. Entsprechend ist der Abstand zwischen einzelnen Bearbeitungsstationen relativ groß. Die Blechteile weisen dabei ein beträchtliches Gewicht auf. Diese Teile müssen, um eine hohe Hubzahl der Transferpresse zu ermöglichen, relativ schnell transportiert, d.h. von Arbeitsstation zu Arbeitsstation zügig beschleunigt und wieder abgebremst werden, wobei die Transfereinrichtung die dazu erforderliche Antriebsleistung an dem Werkstück aufbringen und zugleich eine hohe Positionierungspräzision sicherstellen muss.

Transferanlagen, die den Werkstücktransport bspw. zwischen Pressenstufen bewerkstelligen sollen, unterliegen dabei außerdem noch relativ engen konstruktiven Randbedingungen. Bspw. ist es zu wünschen, dass der Platz seitlich neben den Pressenschiebetischen frei bleibt, so dass Schiebetische von der Transfereinrichtung ungehindert seitlich aus der Transferpresse herausgefahren werden können.

Aus der US-A-4574941 ist eine Werkstücktransportvorrichtung zum Transport von Blechteilen gemäß dem Oberbegriff des Anspruchs 1 bekannt, bei der die Blechteile mittels wenigstens eines Saugers von oben her temporär aufgenommen werden. Der Sauger ist an einem Ende eines Arms gelagert, dessen anderes Ende an einem von einer Parallelogrammführung gehaltenen Träger befestigt ist. Der Träger bildet das untere Ende der aus zwei parallelen Schwenkarmen gebildeten Parallelogrammführung, deren oberes Ende an einem Schlitten befestigt ist. Dieser sitzt auf einer Führungsschiene, die etwa vertikal ausgerichtet ist, wobei sich ihre Neigung durch eine Kurvenfolgerverstelleinrichtung im Arbeitstakt der Transfereinrichtung verstellen lässt. Zum Antrieb eines Schwenkarms der Parallelogrammführung dient ein etwa mittig an dem Schwenkarm angreifender Lenker, dessen anderes Ende mit einem Drehantrieb verbunden ist. Die Drehachse desselben ist ortsfest positioniert. Der Lenker 33 ist angetrieben. so dass er zwangsläufig im Betrieb um etwas mehr als 180° hin und her schwenkt.

Bei dieser Transfereinrichtung hat eine Änderung der Neigung der Führungsschiene, die zur Gestaltung der Transferkurve erforderlich sein kann, eine Neigungsänderung der Saugereinrichtung zur Folge.

Die Aufgabe der Erfindung besteht deshalb darin, eine Transport- und/oder Positioniereinrichtung zu schaffen, die das Überbrücken relativ langer Transportwege in kurzer Zeit und ein präzises Positionieren der transportierten Teile ermöglicht.

Diese Aufgabe wird mit einer Transport- und/oder Positioniereinrichtung nach Anspruch 1 gelöst:

Die Transport- und/oder Positioniereinrichtung weist ein Hebelgetriebe mit einem Schwenkarm auf, der an einem Ende ein Trägermittel trägt, das mit dem Werkstück in Eingriff gebracht werden oder das Werkstück anderweitig aufnehmen kann. Der Schwenkarm liegt in dem Kraftübertragungsweg, der sich von einer Antriebsquelle zu dem Trägermittel erstreckt. Der Schwenkarm übernimmt dabei eine Übersetzung ins Schnelle. Er ist an zwei von dem Trägermittel beabstandeten Stellen geführt bzw. angetrieben, wobei der Abstand zwischen diesen beiden Stellen kleiner ist als der Abstand des Trägermittels von der Schwenkachse des Hebels. Es ergibt sich somit eine Hebelübersetzung. Diese führt dazu, dass das Trägermittel eine schnellere und weitreichendere Bewegung ausführt, als an dem Schwenkarm angreifende Antriebsmittel. Zu diesen können Führungen, bspw. Linearführungen, Schlitten und ähnliches gehören. Weil diese eine niedrigere Maximalgeschwindigkeit erreichen und kürzere Wege zurücklegen als das Trägermittel, spielt deren Masse für die Dynamik des Antriebs keine so große Rolle wie die Masse des Trägermittels. Sie können so ausgelegt werden, dass sie eine präzise Führung erbringen. Damit kann an dem Trägermittel eine hohe Positioniergenauigkeit erreicht werden. Durch die Hebelübersetzung an dem Schwenkarm wird es somit möglich, bei guter Genauigkeit lange Transportwege schnell zu durchlaufen.

Bei einer bevorzugten Ausführungsform sind zwei zueinander spiegelsymmetrische Antriebseinrichtungen vorgesehen, deren Schwenkarme untereinander durch eine Traverse verbunden sind, die das Trägermittel bildet. Die Traverse kann bspw. mit Saugerspinnen oder anderweitigen Einrichtungen versehen sein, die dazu dienen, zeitweilig Werkstücke zu tragen. Die Quertraverse wird von den beiden Schwenkarmen vorzugsweise auf einer schleifenförmigen Bahn geführt, die die Transferkurve bildet und die bspw. in einer Vertikalebene verläuft. Damit wird der Funktion nach ein Zweiachstransfer geschaffen, bei dem die Quertraverse vertikal und horizontal bewegt wird. Die Bahn oder Transferkurve ist dabei nicht fix vorgegeben, sondern vorzugsweise wähl- oder einstellbar, indem zu der Antriebseinrichtung gehörige Antriebe entsprechend angesteuert werden. Dies wird vorzugsweise von einer programmierbaren Steuereinrichtung übernommen. Werden die an den beiden Enden der Traverse angreifenden Antriebseinrichtungen unterschiedlich angesteuert, kann die Traverse außerdem noch Schwenkbewegungen um eine Vertikalachse oder eine längs zur Transportrichtung liegende Achse ausführen.

Das Trägermittel, d.h. bspw. die Traverse kann außerdem mit einer Einrichtung versehen sein, um diese beim Durchlaufen der Transferkurve unverdreht zu halten oder gezielt zu verdrehen (zu verkippen). Dies kann sowohl mit gesonderten, von den Schwenkarmen getragenen Antrieben, als auch über Kraftübertragungsmittel, wie bspw. Parallelogrammgestänge oder Zugmittelgetriebe, zu anderweitig angeordneten Antrieben erfolgen.

Der Schwenkarm ist um eine Drehachse schwenkbar, die nicht ortsfest angeordnet, sondern entlang einer vorgegebenen Bahn verstellbar ist. Bspw. kann die Schwenkachse durch ein geeignetes Lager an einem Schlitten festgelegt sein, wobei der Schlitten an einer Führung gelagert ist. Die Schlittenführung kann vertikal, bedarfsweise auch horizontal oder anderweitig orientiert, sowie gerade oder gebogen sein. Alternativ kann das die Drehachse festlegende Lager des Schwenkarms auch anderweitig, bspw. über eine Schwinge, ein Parallelogramm o.ä., geführt sein.

Bei einer bevorzugten Ausführungsform ist der Schwenkarm in Mittellage vertikal orientiert und schwenkt zur Durchführung eines Transportschritts nach beiden Seiten aus. In der Mittellage, die als Parkposition gelten kann, sind die Seiten der Schiebetische der benachbarten Bearbeitungsstationen frei und somit auch zugänglich. Dies ist für den Werkzeugwechsel vorteilhaft. Außerdem ist es möglich, die Antriebseinrichtung oberhalb der Tische anzuordnen. Der Raum unterhalb und zwischen den Tischen bleibt somit frei für Abfallschächte und Schrottförderbänder.

Die Antriebseinrichtung kann an den Pressenständern gelagert sein, was eine äußerst platz- und raumsparende Bauweise ermöglicht und Probleme einer Trennstelle zwischen den Pressenständern und den Tischen vermeidet.

Das Hebelgetriebe, zu dem der Schwenkarm gehört, kann unterschiedlich ausgebildet sein. Bspw. kann es einen an einer Verbindungsstelle mit dem Schwenkarm gelenkig verbundenen Lenker aufweisen, der mit einem Drehantrieb in Verbindung steht. Ist der Drehantrieb bspw. an einem an einer Führung verschiebbar gelagerten Schlitten gehalten, der seinerseits mit einer feststehenden Antriebseinrichtung in Verbindung steht, kann durch gezielte Ansteuerung des Schlittenantriebs und des Drehantriebs eine gewünschte Kurve des Trägermittels gefahren werden. Bei einer bevorzugten Ausführungsform ist der Schlitten an einer Vertikalführung gelagert. Der Lenker greift etwa mittig an dem Schwenkarm an, dessen von dem Trägermittel abliegendes Ende wiederum schwenkbar an einem Schlitten gelagert ist, dessen Linearführung parallel zu der erstgenannten Führung ausgerichtet ist. Bei dieser Ausführungsform ergeben sich dann besonders übersichtliche Ansteuer- und Antriebsverhältnisse, wenn die Länge des Lenkers der halben Schwenkarmlänge entspricht, die durch den Abstand der Mittel oder Kippachse zu der Schwenkachse des Schwenkarms festgelegt ist und wenn der Lenker außerdem mittig an dem Schwenkarm angreift. In diesem Fall bewirkt eine Ansteuerung des Schlittenantriebs ausschließlich eine Höhenverstellung des Trägermittels und eine Ansteuerung des Schwenkantriebs ausschließlich eine Linearverstellung des Trägermittels in Transportrichtung.

Alternativ kann der Schwenkarm durch zwei miteinander zusammenwirkende Lenker angetrieben werden, die in spitzem Winkel zueinander angeordnet sind und die am Schwenkarm mit einem Gelenk befestigt sind, das für beide Lenker eine übereinstimmende oder gemeinsame Gelenkachse festlegt. Die Lenker sind anderenends vorzugsweise gelenkig an Schlitten einer Linearführung aufgehängt, die mit Linearantrieben versehen sind. Die Führungen können vertikal an dem Pressenständer vorgesehen sein und eine vertikale Führungseinrichtung aufweisen. Es ergibt sich eine gedrungene Bauform, bei der die Transportbewegung des Trägermittels erreicht wird, ohne dass dazu sich in Transportrichtung erstreckende Kraftübertragungsmittel vorgesehen sein müßten. Die von den Schlitten zu durchlaufenden Linearhübe sind wegen der Übersetzung ins Schnelle durch den Schwenkarm relativ kurz, so dass sich eine gedrungene platzsparende Bauform ergibt.

Die Lenker und/oder Schwenkarme können bedarfsweise längenverstellbar ausgebildet sein. Dies kann zusätzliche Freiheitsgrade bei der Führung des Trägermittels schaffen.

Vorzugsweise ist die Antriebseinrichtung mit einer Krafterzeugungseinrichtung verbunden, die über das Hebelgetriebe der Antriebseinrichtung eine Kompensationskraft zu dem Trägermittel leitet, die die Gewichtskraft des Trägermittels und des angeschlossenen Hebelgetriebes wenigstens näherungsweise kompensiert. Die Krafterzeugungseinrichtung kann bei der Ausführungsform mit drehend angetriebenem Lenker an dessen Schlitten angreifen. Zusätzlich kann der Drehantrieb kraftkompensiert sein. Dazu ist es möglich, den Lenker an einer Stelle zwischen seiner Schwenkachse und der Gelenkachse mit einer im Wesentlichen vertikal nach oben gerichteten oder jenseits der Schwenkachse in einer nach unten gerichteten mehr oder weniger konstanten Kraft zu beaufschlagen. Dies kann über Pneumatikzylinder erfolgen.

Bei der Ausführungsform mit zwei im spitzen Winkel zueinander angeordneten Lenkern zur Betätigung des Schwenkarms kann die Gewichtskompensation über einen dritten Lenker erfolgen, der mit im Wesentlichen gleicher Scharnierachse an dem Schwenkarm angreift und zu einem weiteren Vertikalschlitten läuft. Dieser ist über ein Gestänge mit einem Kraftgenerator, bspw. einem Pneumatikzylinder, verbunden, der eine weitgehend konstante, vertikal nach oben gerichtete Kraft auf den Schlitten leitet.

Vorteilhafte Einzelheiten von Ausführungsformen der Erfindung sind Gegenstand von Unteransprüchen, der Zeichnung und/oder der Beschreibung. In der Zeichnung sind Ausführungsbeispiele der Erfindung veranschaulicht. Es zeigen:
- Fig. 1: eine Pressenstraße mit mehreren Arbeitsstationen, die durch Transfereinheiten miteinander verknüpft sind, in ausschnittsweiser perspektivischer Prinzipdarstellung,
- Fig. 2: zwei Arbeitsstationen der Pressenstraße nach Figur 1 und die dazwischen angeordnete Transfereinheit, in perspektivischer Darstellung, in einem anderen Maßstab,
- Fig. 3: die Kinematik der Transfereinheit nach Figur 2, in schematischer Darstellung,
- Fig. 4: eine abgewandelte Ausführungsform einer Transfereinheit zur Verknüpfung zweier Arbeitsstationen, in perspektivischer Darstellung,
- Fig. 5: die Arbeitsstationen und die Transfereinheit nach Figur 4, in einer schematischen Seitenansicht,
- Fig. 6: die Kinematik einer Transfereinheit nach dem in Figur 2 veranschaulichten Prinzip mit einer abgewandelten Ausführungsform eines Schwenkantriebs,
- Fig. 7: die Kinematik einer Transfereinheit mit Parallelogrammführung für die Werkstückaufnahme, und
- Fig. 8: die Kinematik einer abgewandelte Transfereinheit.

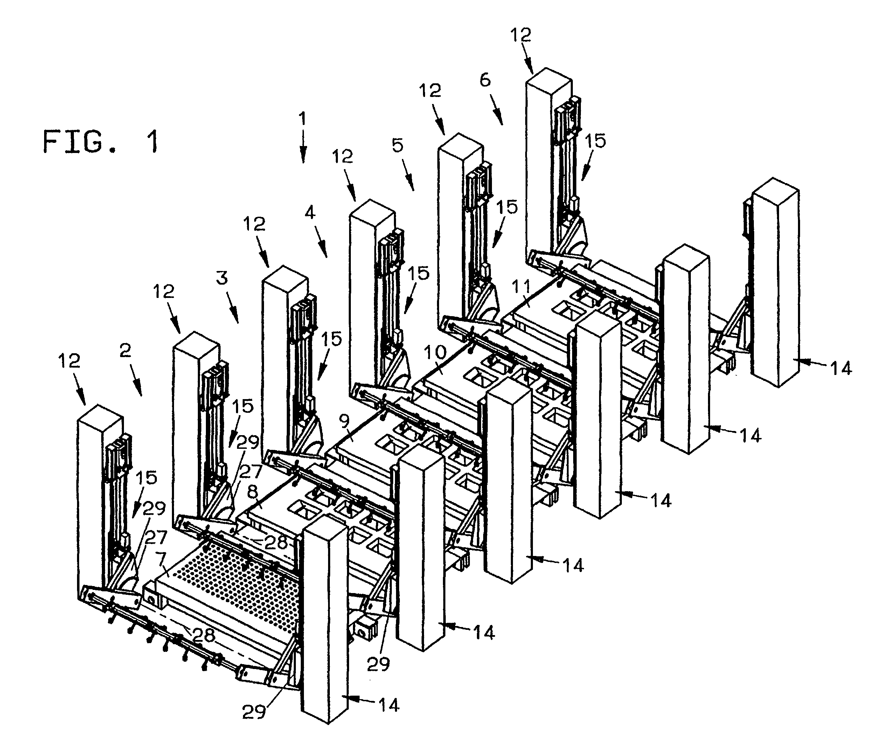

In Figur 1 ist eine Pressenstrasse 1 anhand mehrerer aufeinanderfolgender Arbeitsstationen 2, 3, 4, 5, 6 zur Bearbeitung von Werkstücken veranschaulicht. Zu jeder Arbeitsstation 2 bis 6 gehört jeweils ein Schiebetisch 7, 8, 9, 10, 11, der der Aufnahme eines nicht weiter veranschaulichten Werkzeugs dient. Zu beiden Seiten der durch die Schiebetische 7, 8, 9, 10, 11 gebildeten Reihe sind Pressenständer 12, 14 angeordnet, die mit den Schiebetischen 7, 8, 9, 10, 11 auf Lücke stehen.

Um den Transport der Werkstücke von Arbeitsstation zu Arbeitsstation zu ermöglichen, sind jeweils zwischen zwei aufeinanderfolgenden Arbeitsstationen sowie am Anfang und am Ende der aus den Arbeitsstationen 7 bis 11 gebildeten Reihe Transfereinheiten 15 angeordnet, die untereinander gleich ausgebildet und deshalb mit dem gleichen Bezugszeichen versehen sind.

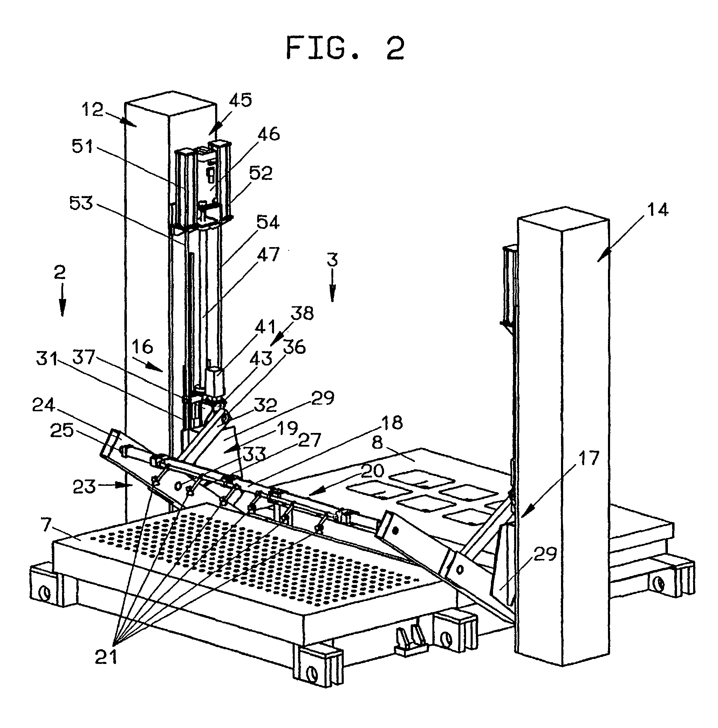

Die zwischen den Arbeitsstationen 2 und 3 und somit zwischen den Schiebetischen 7 und 8 angeordnete Transfereinheit 15 ist in Figur 2 gesondert veranschaulicht und wird nachfolgend stellvertretend für alle anderen Transfereinheiten 15 der Pressenstrasse 1 beschrieben:

Die Transfereinheit 15 weist zwei Antriebseinrichtungen 16, 17 auf, die zueinander bezüglich einer Vertikalebene spiegelsymmetrisch ausgebildet sind und zwischeneinander eine Traverse 18 halten, die als Trägermittel für Werkstücke dient. Zum Aufnehmen oder Ergreifen und Halten der Werkstücke, bspw. großflächiger Blechteile, wenn es sich bei der Transferpresse 1 um eine Karosseriepresse handelt, sind an den Traversen 18 Saugerspinnen 19, 20 angeordnet, die jeweils mehrere voneinander beabstandete Sauger 21 aufweisen. Infolge der Spiegelsymmetrie zwischen den Antriebseinrichtungen 16, 17 gilt die Beschreibung der Antriebseinrichtung 16 entsprechend, für die Antriebseinrichtung 17, wobei zur Bezugnahme übereinstimmende Bezugszeichen verwendet sind.

Zu der Antriebseinrichtung 16 gehört ein Hebelgetriebe 23 mit einem Schwenkarm 24, der an einem Ende eine Aufnahme 25 für die Traverse 18 aufweist. Die Aufnahme 25 bildet den Abtrieb des Hebelgetriebes 23 und lagert die Traverse 18 drehbar um eine quer zu der Transportrichtung ausgerichtete Achse - die sogenannte Kippachse.

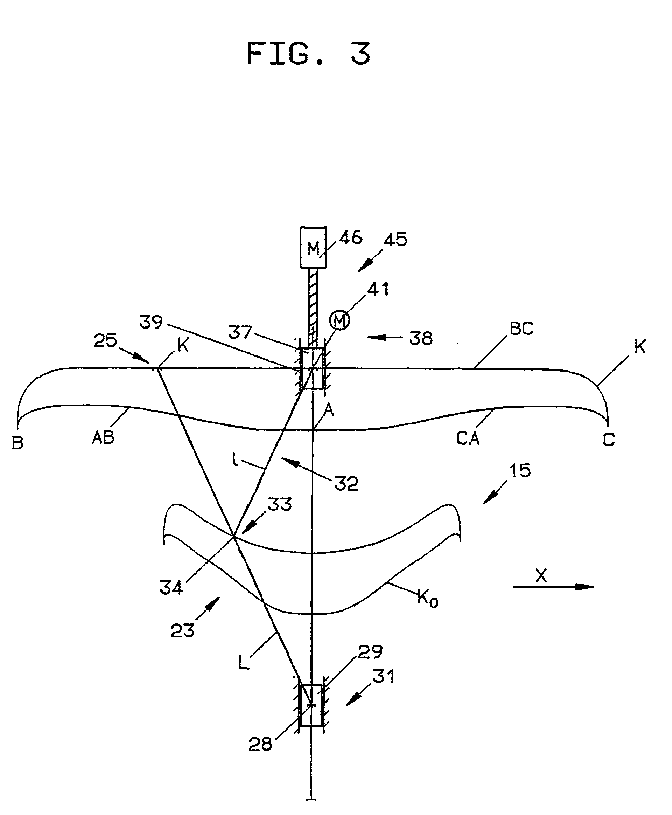

Der Schwenkarm 24 ist über eine Führung 27, die eine Schwenkachse 28 festlegt, an einem Schlitten 29 gelagert. Die Schwenkachse 28 und eine durch die Mittelachse der Führung 25 oder der Traverse 18 gebildete Kippachse K bestimmen die Länge des Schwenkarms 24, die in Figur 3 mit L bezeichnet ist. Der Schlitten 29 kann durch eine angetriebene oder passive Lenkerführung ersetzt sein, die anstelle einer Linearführung eine Bogenführung darstellt.

Der Schlitten 29 ist an einer Linearführung 31 vertikal verstellbar gelagert. Dabei läuft der Schlitten 29 frei, d.h. er ist mit keinem Antrieb verbunden und in Vertikalrichtung frei beweglich. Der Schwenkarm 24 ist an dem Schlitten 29 frei schwenkbar. Somit sind auf Höhe der Schiebetische 7, 8 und unterhalb derselben keinerlei Antriebseinrichtungen vorhanden. Bedarfsweise kann ein Schwenkmotor zum Schwenken der Traversen vorgesehen sein.

Der Antrieb des Schwenkarms 24 erfolgt über einen Lenker 32, dessen Länge l die Hälfte der Länge L des Schwenkarms 24 beträgt. Der Lenker 32 ist mit dem Schwenkarm 24 schwenkbar bei einem Gelenk 33 verbunden, dessen Gelenkachse 34 mittig zwischen der Kippachse K und der Schwenkachse 28 liegt.

Mit seinem anderen, von dem Schwenkarm 24 abliegenden Ende ist der Lenker 32 mit einem Wellenstumpf 36 verbunden, der der Abtrieb eines auf einem Linearschlitten 37 gelagerten Schwenkantriebs 38 ist. Der Schlitten 37 ist von einer Schlittenführung 39 in Vertikalrichtung geführt. Die Schlittenführung 39 ist parallel zur Schlittenführung 31 und wie diese an dem Pressenständer 12 oder 14 angeordnet. Der von dem Schlitten 37 getragene Schwenkantrieb 38 wird durch einen Stellmotor 41 und ein Untersetzungsgetriebe 43 gebildet, dessen Ausgang der Wellenstumpf 36 ist.

Der Schlitten 37 ist mit einem Hubantrieb 45 verbunden, zu dem ein Stellmotor 46 und ein nachgeordnetes Spindelhubgetriebe 47 gehören. Beide Motoren 41, 46 unterstehen der Steuerung einer zentralen Steuerungseinrichtung.

Zum Ausgleich des an der Traverse 18 angreifenden Gewichts, sowie des Gewichts des aus dem Schwenkarm 24 und dem Lenker 32 bestehenden Hebelgetriebes dient eine Krafterzeugungseinrichtung, die bspw. zwei Pneumatikzylinder 51, 52 aufweist, deren Innendruck entweder im Wesentlichen konstant und/oder ggfs. von der Steuerungseinrichtung gesteuert ist. Die Pneumatikzylinder 51, 52 sind über Zugstreben 53, 54 mit dem Schlitten 37 verbunden.

Die insoweit beschriebene Transfereinheit 15 arbeitet wie in Figur 3 schematisch veranschaulicht folgendermaßen:

Die Steuereinheit veranlasst die Stellmotoren 41, 46, den Schlitten 37 so zu heben und zu senken und den Lenker 32 so zu schwenken, dass die Gelenkachse 34 die in Figur 3 veranschaulichte verzerrte Transferkurve K₀ durchläuft. Das Gelenk 33 bildet dabei den Antrieb für den Schwenkarm 24. Sein unteres Ende stützt sich an dem Schlitten 29 ab, der somit das Lager für den Schwenkarm 24 bildet. Durch die Hebelübersetzung von dem Antrieb bei dem Gelenk 33 zu der Aufnahme 25 entsteht an der Aufnahme 25 und somit an dem Trägermittel 18 die gewünschte schleifenförmige Transferkurve K. Die Transferkurve K weist in Transferrichtung X eine Länge auf, die doppelt so groß ist wie die Länge der Kurve K₀ in Transferrichtung. In der Höhe stimmen beide Kurven ungefähr überein. Der Schwenkarm 24 übersetzt somit ins Schnelle, d.h. das Trägermittel 18 bewegt sich erheblich schneller und wird stärker beschleunigt und stärker abgebremst als das Gelenk 33. Die schnelle Transferbewegung wird mit relativ langsamen Schwenkbewegungen an dem Lenker 32 und relativ langsamen Hebe- und Senkbewegungen des Schlittens 37 erreicht. Die trägen Massen dieser Elemente beeinträchtigen deshalb die Beschleunigung und das Abbremsen des Trägermittels 18 mit verminderten Werten. Dadurch lässt sich eine gute Antriebsdynamik erzielen, wobei die vorgestellte Antriebseinrichtung 16 außerdem eine gute Positioniergenauigkeit gestattet. Bei dem in Figur 3 veranschaulichten Maßverhältnissen (L = 2*1) sind die Vertikalrichtung und die Transportrichtung X entkoppelt, d.h. eine Bewegung des Motors 41 wird ausschließlich in eine X-Bewegung und eine Bewegung des Motors 46 wird ausschließlich in eine reine Y-Bewegung umgesetzt.

In Ruhestellung und zu Beginn eines Arbeitsspiels der Transfereinheit 15 ist der Schwenkarm 24 von dem Lenker 32 in Vertikalposition geschwenkt. Die Kippachse K befindet sich in einem ersten Punkt A der Transferkurve K. Während das Werkzeug der in Transportrichtung X vorgelagerten Bearbeitungsstufe 2 öffnet, wird der Schwenkantrieb 38 betätigt, indem der Motor 41 so angesteuert wird, dass der Lenker 32 in Fig. 3 nach links, d.h. entgegen der Transportrichtung X schwenkt. Zugleich vollführt der Schlitten 37 durch Ansteuerung des Motors 46 eine Hebe-Senk-Bewegung, so dass das Trägermittel 18 mit seiner Kippachse K von dem Bahnpunkt A ausgehend den Kurvenabschnitt B absolviert und in einer nahezu vertikalen Senkbewegung an dem Aufnahmepunkt B ankommt. Hier wird durch Betätigung der Sauger 21 das Werkstück aufgenommen, woraufhin zunächst der Motor 46 angesteuert wird, um das Werkstück anzuheben. Sobald der Hub begonnen hat, wird der Motor 41 entgegen seiner ursprünglichen Richtung angesteuert, wodurch das Trägermittel 18 in Transportrichtung X stark beschleunigt wird und den Kurvenzug BC zum Ablagepunkt C durchläuft. Kurz vor Erreichen des Ablagepunkts C wird der Schlitten 37 wieder abgesenkt und der Drehantrieb 38 bremst die Fortbewegung ab. Ist das Werkstück im Bahnpunkt C in dem Werkzeug der nachfolgenden Bearbeitungsstufe 3 abgelegt, werden der Schwenkantrieb 38 und der Hubantrieb 45 so angesteuert, dass das Trägermittel 18 auf der Bahnkurve CA zum dem Ausgangspunkt A zurückläuft. Hier befindet sich das Trägermittel 18 vollständig zwischen den Bearbeitungsstufen 2, 3 und die Werkstückbearbeitung kann vonstatten gehen.

Abweichend von der vorstehend beschriebenen Ausführungsform kann der Lenker 32 auch an einem ortsfest gelagerten Schwenkantrieb befestigt sein. Die Höhenverstellung ist dann bspw. durch einen Teleskopantrieb des Lenkers 32 erreichbar, der dann längenverstellbar ausgebildet ist. Alternativ kann sowohl bei der Ausführungsform mit Schlitten 37 als auch bei der Ausführungsform mit Anlenkung des Lenkers 32 an einer ortsfesten Schwenkachse der Schwenkantrieb an dem Gelenk 33 angeordnet werden. Der Schwenkarm unterliegt dann allerdings größeren Bewegungen und Beschleunigungen.

Bedarfsweise kann ein Schwenkantrieb auch an dem Schlitten 29 angeordnet sein und direkt auf den Schwenkarm 24 wirken. Dies sowohl wenn der Lenker 32 längenunveränderlich und an einem Schlitten 37 gelagert ist, als auch wenn der Lenker 32 als Teleskop ausgebildet ist und sein Anlenkpunkt von einer raumfesten Schwenkachse bestimmt wird. Unabhängig davon wie der Schwenkantrieb des Schwenkarms 24 im einzelnen realisiert ist, kann der Schwenkarm 24 auch als Teleskop ausgebildet sein.

Die teleskopierbare Stelle kann sowohl oberhalb als auch unterhalb des Gelenks 33 angeordnet und mit einem Teleskopantrieb versehen sein. Hier ist es möglich, auf den unteren Schlitten 29 zu verzichten. Diese Bauform kann zu einer verringerten Bauhöhe führen, was ebenfalls Vorteile aufweisen kann.

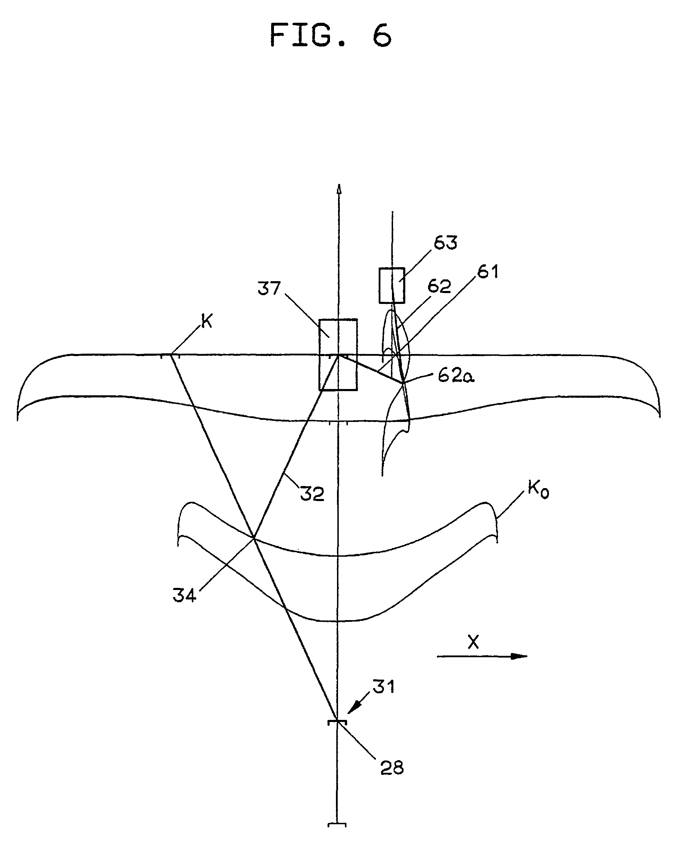

Eine weiter abgewandelte Ausführungsform der Antriebseinrichtung 16 geht aus der in Fig. 6 veranschaulichten Kinematik hervor. Anstelle des von dem Schlitten 37 getragenen Schwenkantriebs 38 ist der Lenker 32 mit einem fest mit ihm verbundenen Hebelarm 61 versehen, der über ein Pleuel 62 mit einem Schlitten 63 verbunden ist. Dieser ist in einer Linearführung geführt, die vorzugsweise parallel zu der Linearführung des Schlittens 37 ausgerichtet ist. Ein Antrieb des Schlittens 63 bewirkt eine Verschwenkung des Lenkers 32, sobald dieser nicht synchron zu dem Antrieb des Schlittens 37 angesteuert wird.

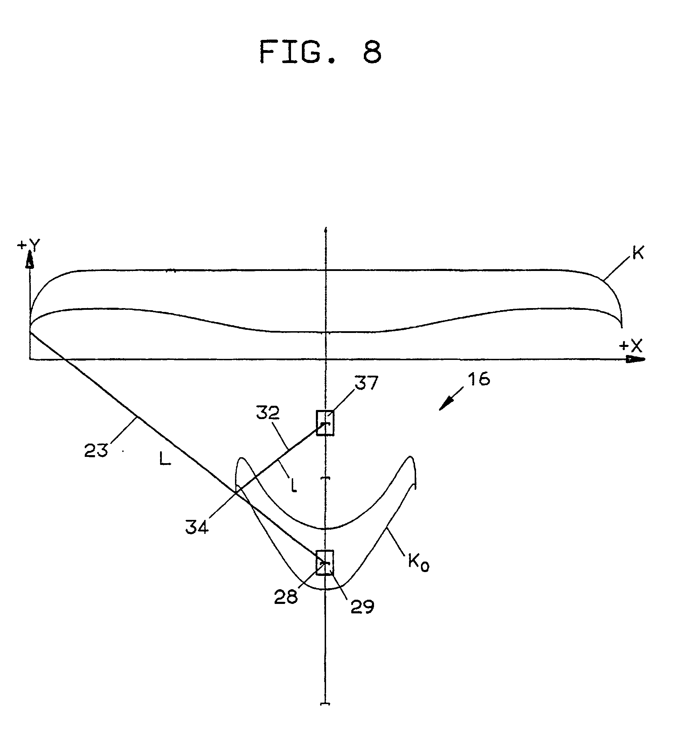

In Fig. 8 ist eine Ausführungsform der Antriebseinrichtung 16 veranschaulicht, bei der die Längenverhältnisse zwischen dem Schwenkarm 24 und dem Lenker 32 anders als bisher beschriebenen Verhältnissen sind. Die Länge L des Schwenkarms 24 übersteigt die Länge l des Lenkers 32 um mehr als das Doppelte. Es ergibt sich dadurch eine größere Übersetzung. Die Führungen und Antriebe können nach allen vorstehend erläuterten Varianten und Ausführungsformen ausgebildet und angeordnet werden. Außerdem ist es möglich, bei allen Ausführungsformen die Antriebseinrichtung 16 gewissermaßen hängend anzuordnen, d.h. in Fig. 8 kopfstehend. Dies kann Bedeutung haben, wenn alle Antriebe und Führungen möglichst weit oberhalb der Schiebetische 7, 8 anzuordnen sind. Im Falle der hängenden Montage können die Antriebe der Schlitten unabhängig davon, ob der Schlitten 37 angetrieben ist und der Schlitten 29 frei läuft, oder ob der Schlitten 29 angetrieben ist und der Schlitten 37 frei läuft, oberhalb des Hebelgetriebes angeordnet werden. Außerdem kann auf die Schlitten 37, 29, verzichtet werden, wenn der Schwenkarm 24 als Teleskop ausgebildet und somit der Abstand zwischen der Gelenkachse 34 und der Schwenkachse 28 variabel ist.

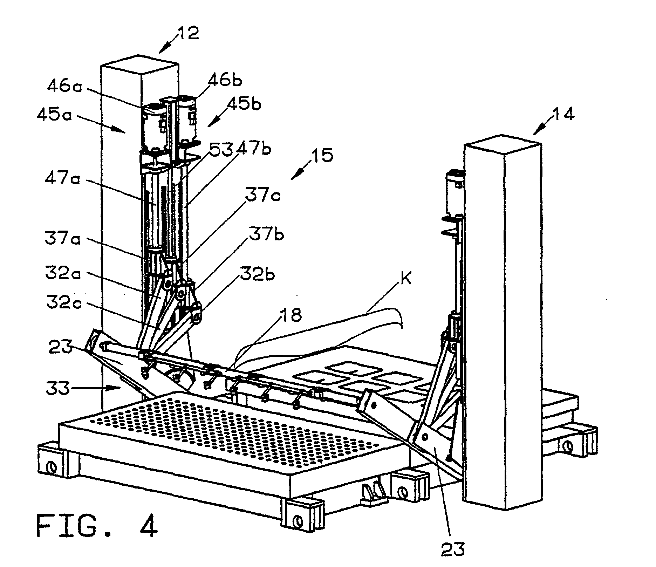

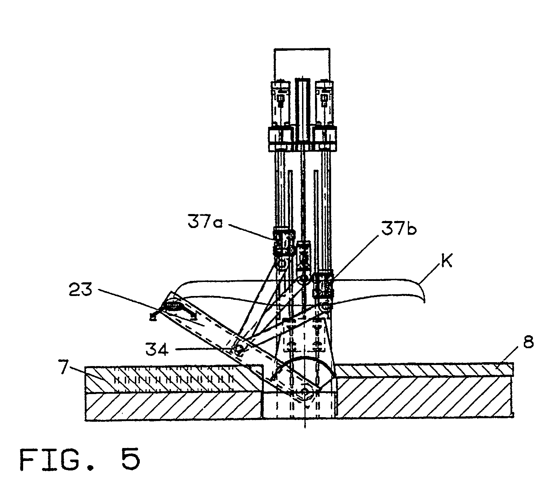

Eine weitere Ausführungsform der Transport- und Positioniereinheit 16 geht aus Fig. 4 und 5 hervor. Die Ausbildung und Lagerung des Schwenkarms 24 und der von ihm getragenen Traverse 18 stimmt mit der Ausführungsform nach Fig. 2 überein. Die Transfereinheit 15 nach Fig. 4 unterscheidet sich jedoch von den vorstehend beschriebenen durch die Positionierung der Schwenkachse 34 im Raum. Dazu dienen zwei Lenker 32a, 32b, die an dem Gelenk 33 an dem Schwenkarm 24 angelenkt sind. Beide Lenker 32a, 32b weisen die gleiche Scharnierachse 34 auf.

Die Lenker 32a, 32b erstrecken sich im spitzen Winkel zueinander von dem Schwenkarm 24 weg zu Schlitten 37a, 37b, die an zueinander bspw. parallelen Linearführungen an dem Presserständer 12 (14) gelagert sind. An den Schlitten 37a, 37b sind die bspw. gleich lang ausgebildeten Lenker 32a, 32b frei schwenkbar gelagert. Die Schlitten 37a, 37b stehen jeweils mit einem Hubantrieb 45a, 45b in Verbindung. Zu diesen gehören Stellmotoren 46a, 46b, die über Lineargetriebe, bspw. Spindelhubgetriebe 47a, 47b auf die Schlitten 37a, 37b wirken.

Ein dritter Lenker 32c, der ebenfalls an dem Gelenk 33 oder in der Nähe desselben angreift, führt zu einem dritten Schlitten 37c, der bspw. mit einer im Wesentlichen konstanten, vertikal nach oben gerichteten Kraft beaufschlagt und an einer Vertikalführung gelagert ist. Zur Erzeugung der Kraft dient der als Kraftgenerator eingerichtete Pneumatikzylinder 51, der über die Zugstrebe 53 mit dem Schlitten 37c verbunden ist.

Bei dieser Transfereinheit 15 wird an der Gelenkachse 34 die Transferkurve K₀ durch Zusammenspiel der Hubbewegung der Schlitten 37a, 37b erzielt. Wie bei den vorstehend beschriebenen Ausführungsformen setzt der Schwenkarm 24 die Bewegung der Gelenkachse 34 in die Transferkurve K um.

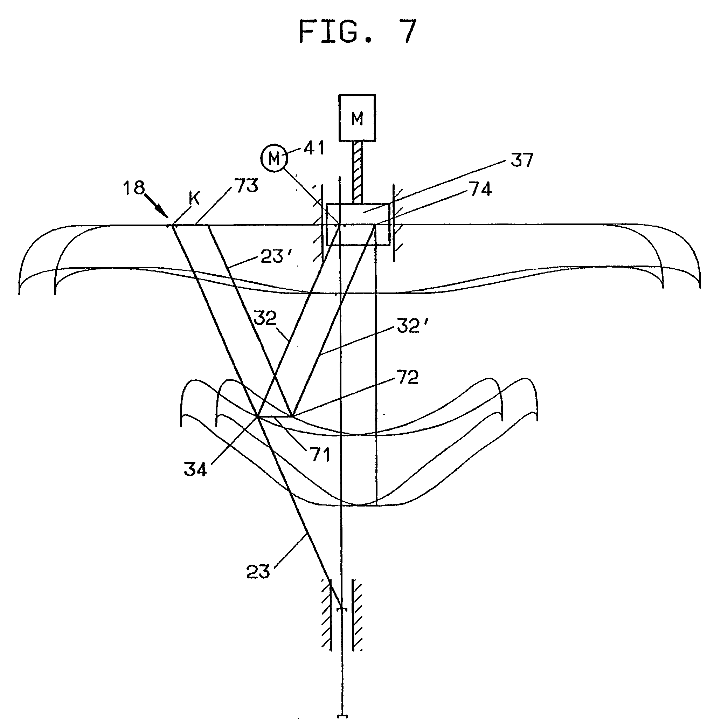

Bei allen beschriebenen Ausführungsformen ist es sowohl möglich, die Traverse 18 unverkippt zu führen, als auch eine Möglichkeit zu schaffen, diese gezielt zu schwenken oder zu kippen. In Fig. 7 ist eine Kinematik veranschaulicht, bei der ausgehend von dem Schlitten 37, eine Parallelogrammführung zu der Traverse 18 führt. Parallel zu dem Lenker 32 ist ein Lenker 32' vorgesehen, der schwenkbar an dem Schlitten 37 gelagert ist. An dem Schwenkarm 24 ist schwenkbar um die Gelenkachse 34 ein kurzer Führungshebel 71 angelenkt, der sich parallel zu der gedachten Verbindung der gegenüberliegenden Schwenkachsen der Lenker 32, 32' erstreckt. Der Lenker 32', dessen Länge mit der Länge des Lenkers 32 übereinstimmt, ist mit dem Führungshebel 71 bei einer Achse 72 schwenkbar verbunden. Die Lenker 32, 32' bilden ein Parallelogramm. Dies gilt auch für den sich von der Gelenkachse 34 zu der Kippachse K erstreckenden Abschnitts des Schwenkarms 24 und einen weiteren Lenker 23', der von dem Führungshebel 71 zu einem Hebel 73 führt, der mit Traverse 18 verbunden ist. Der Hebel 72 ist dabei genauso lang wie der Führungshebel 71.

Bei diese Ausführungsform ist die Kipplage der Traverse 18 durch die Ausrichtung des Hebels 73 bestimmt, die in jeder Schwenkposition mit der Ausrichtung der Verbindungslinie zwischen den oberen Ende der Lenker 32, 32' übereinstimmt. Um ein gezieltes Verkippen der Traverse 18 zu erzielen, kann der Lenker 32' an dem Schlitten bei einer Anlenkstelle 74 verbunden sein, die in Bezug auf den Schlitten 37 höhenverstellbar ist. Ein entsprechender Verstellantrieb kann von dem Schlitten 37 getragen werden. Außerdem ist es möglich, den Lenker 32' und/oder den Lenker 24' längenverstellbar auszubilden.

Eine Transport- und Positioniereinrichtung 15, insbesondere für den Werkstücktransfer, weist zwischen ihren Antriebsmotoren 41, 46 und ihrem Abtrieb 18 ein Hebelgetriebe 23 auf, das eine Übersetzung ins Schnelle vornimmt. Das Hebelgetriebe 23 übernimmt sowohl die Führung als auch den Antrieb des Trägermittels 18, das somit den Abtrieb des Hebelgetriebes bildet. Durch die Übersetzung ins Schnelle können hohe Beschleunigungen und Verzögerungen an dem Trägermittel 18 erzielt werden, bei der die Massenträgheit verwendeter Linearführungen zur Lagerung von Hebeln und Massenträgheiten mitbewegter Antriebe eine deutlich verminderte Rolle spielen. Andererseits kann eine hohe Positioniergenauigkeit erreicht werden.

## Patentansprüche

1. Transport- und/oder Positioniereinrichtung (15), insbesondere für den Werkstücktransfer,
mit einer Antriebseinrichtung (16), die wenigstens ein Hebelgetriebe (23), mit einem Abtrieb (25) zum Antreiben und Positionieren eines Trägermittels (18) aufweist,
wobei zu dem Hebelgetriebe (23) ein Schwenkarm (24) gehört, dessen eines Ende den Abtrieb (25) bildet und mit dem Trägermittel (18) verbunden ist und der an zwei voneinander beabstandeten Verbindungsstellen (28, 34) mit einem Lager (27) und mit einem Antrieb (32, 33) verbunden ist,
wobei der Antrieb (32) wenigstens einen Lenker (32) aufweist, der an seinem ersten Ende an der Antriebsstelle (34) mit dem Schwenkarm (24) verbunden ist, und
wobei der Abstand zwischen der Lagerstelle (28) und der Antriebsstelle (34) kleiner ist, als der Abstand zwischen dem Abtrieb (25) und der Lagerstelle (28),
**dadurch gekennzeichnet,**
**dass** der Lenker (32) an seinem zweiten Ende mit einer verstellbaren Führungseinrichtung (37) verbunden ist.

2. Einrichtung nach Anspruch 1, **dadurch gekennzeichnet, dass** der der Schwenkarm (24) derart geführt ist, dass der Abtrieb (25) eine schleifenförmige Bahn (K) durchläuft, die einen größeren weg durchläuft, als der von der Lagerstelle (28) oder der Antriebsstelle (34) durchlaufene Weg.

3. Einrichtung nach Anspruch 2, **dadurch gekennzeichnet, dass** die Bahn (K) innerhalb einer Vertikalebene verläuft.

4. Einrichtung nach Anspruch 1, **dadurch gekennzeichnet, dass** der Schwenkarm (24) an dem Lager (27) um eine Horizontalachse (28) schwenkbar gelagert ist.

5. Einrichtung nach Anspruch 1, **dadurch gekennzeichnet, dass** das Lager (27) des Schwenkarms (24) auf einer vorgegebenen, vorzugsweise geraden Bahn geführt ist.

6. Einrichtung nach Anspruch 1, **dadurch gekennzeichnet, dass** die Verbindungsstelle (33), bei der der Antrieb (32) des Schwenkarms (24) mit dem Schwenkarm (24) verbunden ist, zwischen dem Lager (27) und dem Abtrieb (25) angeordnet ist.

7. Einrichtung nach Anspruch 1, **dadurch gekennzeichnet, dass** der Antrieb (32) derart ausgebildet und geführt ist, dass die räumliche Lage der Verbindungsstelle (34) des Antriebs (32) mit dem Schwenkarm (24) von dem Antrieb (23) festgelegt ist.

8. Einrichtung nach Anspruch 1, **dadurch gekennzeichnet, dass** die Führungseinrichtung (37) eine Linearführungseinrichtung ist.

9. Einrichtung nach Anspruch 1, **dadurch gekennzeichnet, dass** die Führungseinrichtung (37) mit einer Antriebseinheit (45) verbunden ist.

10. Einrichtung nach Anspruch 1, **dadurch gekennzeichnet, dass** die Führungseinrichtung (37) eine Schlittenführung ist, an deren Schlitten (37) der Lenker (32) schwenkbar gelagert ist.

11. Einrichtung nach Anspruch 10, **dadurch gekennzeichnet, dass** der Lenker (32) mit einem Schwenkantrieb (38) verbunden ist, mit dem die Schwenklage des Lenkers (32) festlegbar ist.

12. Einrichtung nach Anspruch 11, **dadurch gekennzeichnet, dass** der Schwenkantrieb (38) von dem Schlitten (37) getragen ist.

13. Einrichtung nach Anspruch 11, **dadurch gekennzeichnet, dass** der Schwenkantrieb (38) außerhalb (63) des Schlittens (37) angeordnet ist.

14. Einrichtung nach Anspruch 1, **dadurch gekennzeichnet, dass** die Verbindungsstelle (34) zwischen dem Lenker (32) und dem Schwenkarm (24) mittig zwischen dem Lager (27) und dem Abtrieb (25) angeordnet ist.

15. Einrichtung nach Anspruch 13, **dadurch gekennzeichnet, dass** der Schwenkantrieb an einem von der Drehachse des Lenkers (32) beabstandeten Stelle (62a) mit dem Lenker (32) verbunden ist, wobei der Schwenkantrieb vorzugsweise eine Führungseinrichtung (63) aufweist, deren Führungsrichtung parallel zu der Führungseinrichtung (37) des Lenkers (32) ausgerichtet ist, und wobei der Lenker (32) vorzugsweise als zweiarmiger Hebel ausgebildet ist, dessen eines Ende den Schwenkarm (24) führt und dessen anderes Ende mit dem Schwenkantrieb (62, 63) verbunden ist.

16. Einrichtung nach Anspruch 1, **dadurch gekennzeichnet, dass** der Antrieb wenigstens zwei Lenker (32a, 32b) aufweist, über die der Schwenkarm (24) mit Führungseinrichtungen, vorzugsweise Linearführungseinrichtungen verbunden ist, wobei die beiden Lenker (32a, 32b) miteinander einen spitzen Winkel einschließen und an einer Verbindungsstelle um eine gemeinsame Schwenkachse (34) schwenkbar mit dem Schwenkarm (24) verbunden sind.

17. Einrichtung nach Anspruch 16, **dadurch gekennzeichnet, dass** die beiden Führungseinrichtungen jeweils mit einer Antriebseinheit (45a, 45b) verbunden sind, wobei die Führungseinrichtungen Schlittenführungen sind, an deren Schlitten (37a, 37b) die Lenker (32a, 32b) frei schwenkbar gelagert sind.

18. Einrichtung nach Anspruch 17, **dadurch gekennzeichnet, dass** die Führungseinrichtungen zueinander parallele Linearführungen sind.

19. Einrichtung nach Anspruch 1 oder 8, **dadurch gekennzeichnet, dass** der Schwenkarm (24) und/oder der Lenker (32) teleskopierbar ausgebildet und mit einem Teleskopantrieb versehen ist.

20. Einrichtung nach Anspruch 1, **dadurch gekennzeichnet, dass** der Schwenkarm (24) mit einer Einrichtung (24', 32', 71, 73) zur Kippausrichtung des Trägermittels (18) versehen ist.

21. Einrichtung nach Anspruch 1, **dadurch gekennzeichnet, dass** der Schwenkarm (24) eine feststehende Riemenscheibe besitzt, die über einen Zahnriemen mit einer gleich großen Riemenscheibe, die fest mit dem Trägermittel (18) verbunden ist, verbunden ist und ein Verkippen des Trägermittels um eine horizontale Achse quer zur Transportrichtung verhindert.

22. Einrichtung nach Anspruch 21, bei der sich die Riemenscheibe auf dem Schwenkarm (24) an der Verbindungsstelle (28) befindet.

23. Einrichtung nach Anspruch 21 oder 22, bei der die Riemenscheibe auf dem Schwenkarm (24) nicht mehr fest mit dem Schwenkarm (24) verbunden ist, sondern von einem Motor zur gezielten Verkippung des Trägermittels angetrieben wird.

## Claims

1. Transporting and/or positioning arrangement (15), in particular for workpiece transfer,
having a drive arrangement (16), which has at least one lever mechanism (23), with an output (25) for driving and positioning a carrier means (18),
it being the case that the lever mechanism (23) contains a pivoting arm (24), of which one end forms the output (25) and is connected to the carrier means (18) and which is connected, at two spaced-apart connecting locations (28, 34), to a bearing (27) and to a drive (32, 33),
that the drive (32) has at least one link (32) which is connected at its first end, at the drive location (34), to the pivoting arm (24), and
that the spacing between the bearing location (28) and the drive location (34) is smaller than the spacing between the output (25) and the bearing location (28),
**characterized in that** the link (32) is connected at its second end to an adjustable guide arrangement (37).

2. Arrangement according to Claim 1, **characterized in that** the pivoting arm (24) is guided such that the output (25) passes through a loop-like path (K), which covers a greater distance than the distance covered by the bearing location (28) or the drive location (34).

3. Arrangement according to Claim 2, **characterized in that** the path (K) runs within a vertical plane.

4. Arrangement according to Claim 1, **characterized in that** the pivoting arm (24) is mounted on the bearing (27) such that it can be pivoted about a horizontal axis (28).

5. Arrangement according to Claim 1, **characterized in that** the bearing (27) with a pivoting arm (24) is guided over a predetermined, preferably rectilinear path.

6. Arrangement according to Claim 1, **characterized in that** the connecting location (33), at which the drive (32) of the pivoting arm (24) is connected to the pivoting arm (24), is arranged between the bearing (27) and the output (25).

7. Arrangement according to Claim 1, **characterized in that** the drive (32) is designed and guided such that the spatial position of the connecting location (34), at which the drive (32) is connected to the pivoting arm (24), is defined by the drive (32).

8. Arrangement according to Claim 1, **characterized in that** the guide arrangement (37) is a linear guide arrangement.

9. Arrangement according to Claim 1, **characterized in that** the guide arrangement (37) is connected to a drive unit (45).

10. Arrangement according to Claim 1, **characterized in that** the guide arrangement (37) is a carriage guide, the link (32) being mounted in a pivotable manner on the carriage (37) thereof.

11. Arrangement according to Claim 10, **characterized in that** the link (32) is connected to a pivoting drive (38), by means of which the pivoting position of the link (32) can be defined.

12. Arrangement according to Claim 11, **characterized in that** the pivoting drive (38) is borne by the carriage (37).

13. Arrangement according to Claim 11, **characterized in that** the pivoting drive (38) is arranged outside (63) the carriage (37).

14. Arrangement according to Claim 1, **characterized in that** the connecting location (34), at which the link (32) is connected to the pivoting arm (24), is arranged centrally between the bearing (27) and the output (25).

15. Arrangement according to Claim 13, **characterized in that** the pivoting drive is connected to the link (32) at a location (62a) which is spaced apart from the axis of rotation of the link (32) , the pivoting drive preferably having a guide arrangement (63) with a guide direction oriented parallel to the guide arrangement (37) of the link (32), and the link (32) preferably being designed as a two-armed lever, of which one end guides the pivoting arm (24) and the other end is connected to the pivoting drive (62, 63).

16. Arrangement according to Claim 1, **characterized in that** the drive has at least two links (32a, 32b) via which the pivoting arm (24) is connected to guide arrangements, preferably linear guide arrangements, the two links (32a, 32b) enclosing an acute angle with one another and being connected to the pivoting arm (24) at a connecting location such that they can be pivoting about a common pivot axis (34).

17. Arrangement according to Claim 16, **characterized in that** the two guide arrangements are each connected to a drive unit (45a, 45b), the guide arrangements being carriage guides, and the links (32a, 32b) being mounted in a freely pivotable manner on the carriages (37a, 37b) thereof.

18. Arrangement according to Claim 17, **characterized**
**in that** the guide arrangements are mutually parallel linear guides.

19. Arrangement according to Claim 1 or 8, **characterized in that** the pivoting arm (24) and/or the link (32) are/is of telescopic design and provided with a telescope drive.

20. Arrangement according to Claim 1, **characterized in that** the pivoting arm (24) is provided with an arrangement (24', 32', 71, 73) for orienting the tilting of the carrier means (18).

21. Arrangement according to Claim 1, **characterized in that** the pivoting arm (24) has a fixed belt pulley which is connected, via a toothed belt, to a belt pulley of equal size, fixed to the carrier means (18), and which prevents the carrier means from tilting about a horizontal axis transverse to the transporting direction.

22. Arrangement according to Claim 21, in the case of which the belt pulley on the pivoting arm (24) is located at the connecting location (28).

23. Arrangement according to Claim 21 or 22, in the case of which the belt pulley on the pivoting arm (24), rather than being fixed to the pivoting arm (24), is driven by a motor for the specific tilting of the carrier means.

## Revendications

1. Dispositif de transport et/ou de positionnement (15), en particulier pour le transfert de pièces,
comprenant un dispositif d'entraînement (16) qui comporte au moins un mécanisme à leviers (23), un organe de sortie (25) pour l'entraînement et le positionnement d'un moyen porteur (18),
dans lequel le mécanisme à leviers (23) comprend un bras oscillant (24) dont une extrémité forme l'organe de sortie (25) et est reliée au moyen porteur (18) et qui est relié à deux zones de liaison (28, 34) distantes l'une de l'autre qui comprennent un palier (27) et un entraînement (32, 33),
l'entraînement (32) présentant au moins une biellette (32) qui, à sa première extrémité, est reliée au bras oscillant (24), au point d'entraînement (34), et
la distance entre le point d'articulation (28) et le point d'entraînement (34) étant plus petite que la distance entre l'organe de sortie (25) et le point d'articulation (28),
**caractérisé en ce que**
à sa deuxième extrémité, le bras oscillant (32) est relié à un dispositif de guidage réglable (37).

2. Dispositif selon la revendication 1, **caractérisé en ce que** le bras oscillant (24) est guidé de manière que l'organe de sortie (25) décrive une trajectoire (K) en forme de boucle qui parcourt un trajet plus grand que le trajet parcouru par le point d'articulation (28) ou par le point d'entraînement (34).

3. Dispositif selon la revendication 2, **caractérisé en ce que** la trajectoire (K) s'étend dans un plan vertical.

4. Dispositif selon la revendication 1, **caractérisé en ce que** le bras oscillant (24) est monté sur le palier (27) pour pouvoir pivoter autour d'un axe horizontal (28).

5. Dispositif selon la revendication 1, **caractérisé en ce que** le palier (27) du bras oscillant (24) est guidé sur une trajectoire prédéterminée, de préférence droite.

6. Dispositif selon la revendication 1, **caractérisé en ce que** le point de liaison (33) auquel l'entraînement (32) du bras oscillant (24) est relié au bras oscillant (24) est disposé entre le palier (27) et l'organe de sortie (25).

7. Dispositif selon la revendication 1, **caractérisé en ce que** l'entraînement (32) est construit et guidé de manière que la position dans l'espace du point de liaison (34) entre l'entraînement (32) et le bras oscillant (24) est fixé par l'entraînement (23).

8. Dispositif selon la revendication 1, **caractérisé en ce que** le dispositif de guidage (37) est un dispositif de guidage linéaire.

9. Dispositif selon la revendication 1, **caractérisé en ce que** le dispositif de guidage (37) est relié à une unité d'entraînement (45).

10. Dispositif selon la revendication 1, **caractérisé en ce que** le dispositif de guidage (37) est un guidage à coulisseau sur le coulisseau (37) duquel la biellette (32) est montée pivotante.

11. Dispositif selon la revendication 10, **caractérisé en ce que** la biellette (32) est reliée à un entraînement de pivotement (38) avec lequel la position de pivotement de la biellette (32) peut être fixée.

12. Dispositif selon la revendication 11, **caractérisé en ce que** l'entraînement de pivotement (38) est porté par le coulisseau (37).

13. Dispositif selon la revendication 11, **caractérisé en ce que** l'entraînement de pivotement (38) est disposé à l'extérieur (63) du coulisseau (37).

14. Dispositif selon la revendication 1, **caractérisé en ce que** le point de liaison (34) entre la biellette (32) et le bras oscillant (24) est disposé au milieu entre le palier (27) et l'organe de sortie (25).

15. Dispositif selon la revendication 13, **caractérisé en ce que** l'entraînement de pivotement est relié à la biellette (32) en un point (62a) qui est distant de l'axe de rotation de la biellette (32), l'entraînement de pivotement comportant au moins un dispositif de guidage (63) dont la direction de guidage est orientée parallèlement au dispositif de guidage (37) de la biellette (32), la biellette (32) étant de préférence réalisée sous la forme d'un levier à deux bras dont une extrémité guide le bras oscillant (24) et dont l'autre extrémité est reliée à l'entraînement de pivotement (62, 63).

16. Dispositif selon la revendication 1, **caractérisé en ce que** l'entraînement comprend au moins deux biellettes (32a, 32b) par l'intermédiaire desquelles le bras oscillant (24) est relié à des dispositifs de guidage, de préférence des dispositifs de guidage linéaires, les deux biellettes (32a, 32b) formant entre elles un angle aigu et étant reliées au bras oscillant (24), au droit d'un point de liaison, pour pouvoir pivoter autour d'un axe de pivotement commun (34).

17. Dispositif selon la revendication 16, **caractérisé en ce que** les deux dispositifs de guidage sont reliés chacun à une unité d'entraînement (45a, 45b), les dispositifs de guidage étant des guidages à coulisseaux, au droit des coulisseaux (37a, 37b) desquels les biellettes (32a, 32b) sont tourillonnées pour pivoter librement.

18. Dispositif selon la revendication 17, **caractérisé en ce que** les dispositifs de guidage sont des guidages linéaires parallèles entre eux.

19. Dispositif selon la revendication 1 ou 8, **caractérisé en ce que** le bras oscillant (24) et/ou la biellette (32) ont une configuration télescopique et sont pourvus d'un entraînement télescopique.

20. Dispositif selon la revendication 3, **caractérisé en ce que** le bras oscillant (24) est pourvu d'un dispositif (24', 32', 71, 73) pour l'alignement basculant du moyen de support (18).

21. Dispositif selon la revendication 1, **caractérisé en ce que** le bras oscillant (24) comporte une poulie à courroie fixe qui est reliée, par courroie crantée, à une poulie à courroie de même dimension qui est reliée rigidement au moyen porteur (18), et empêche un basculement du moyen porteur autour d'un axe horizontal transversalement à la direction de transport.

22. Dispositif selon la revendication 21, dans lequel la poulie à courroie placée sur le bras oscillant (24) se trouve au point de liaison (28).

23. Dispositif selon la revendication 21 ou 22, dans lequel la poulie à courroie située sur le bras oscillant (24) n'est plus reliée rigidement au bras oscillant (24) mais est entraînée par un moteur pour faire basculer le moyen support de la façon voulue.
